# FASCICULE DE BREVET EUROPEEN

(11) **EP 0 545 826 B1**
(45) Date de publication et mention de la délivrance du brevet: **19.03.1997**
(21) Numéro de dépôt: 92403277.4
(22) Date de dépôt: 04.12.1992
(51) Int. Cl.: B23D 77/12, B23D 77/00

(54) **Alésoir conique**
Konische Reibahle
Conical reamer

(30) Priorité: 05.12.1991 FR 9115070
(43) Date de publication de la demande: 09.06.1993
(73) Titulaire: ETABLISSEMENTS RECOULES ET FILS (S.A), 77330 Ozoir-La-Ferrière (FR); AEROSPATIALE Société Nationale Industrielle, 75781 Paris Cédex 16 (FR)
(72) Inventeur: Bouzounie, Lucien, F-77340 Pontault-Combault (FR); Burreler, Michel, F-92160 Antony (FR); Debat, Claude, F-31490 Brax (FR)
(74) Mandataire: Viard, Jean

(56) Documents cités:
- DE-C- 546 245
- FR-A- 702 342
- FR-A- 1 287 928
- FR-A- 2 516 830
- FR-A- 2 590 191

## Description

La présente invention a pour objet un alésoir, en particulier un alésoir conique destiné en particulier, mais non exclusivement, à la construction aéronautique.

De tels outils sont bien connus et servent à préparer des trous coniques destinés à recevoir des rivets ou autres moyens de fixation analogues, également coniques, tels que ceux qui sont désignés dans la technique sous l'appellation de "TAPER LOK".

Ils comprennent d'une manière générale un corps longiligne terminé par une queue pour le montage ou attachement de l'outil sur un mandrin ou sur tout autre dispositif d'entraînement, tel qu'un fourreau porte-broche, par exemple. A la périphérie du corps s'étendent des arêtes coupantes rectilignes ou plus généralement hélicoïdales habituellement au nombre de trois. Ces arêtes se prolongent radialement vers l'arrière par une dépouille suivie d'une contre-dépouille. Les arêtes et les goujures qui les relient sont de même pas et de même sens. C'est à dire que les outils étant entraînés, en vue par dessus, dans le sens horaire, les arêtes et les goujures sont à droite. Les goujures ont notamment pour but d'évacuer les copeaux vers le haut ou arrière de l'outil.

FR-A-2 516 830 concerne un alésoir cylindrique, dont la partie avant est conique, permettant de réaliser des trous cylindriques dans des matériaux composites incluant des fibres à haute résistance. Pour éviter que l'outil ne se visse dans le matériau, l'hélice de la denture a de préférence un pas à gauche alors que les dents sont taillées pour couper à droite. A l'avant de l'outil est prévue une tête lisse pour le centrage de l'outil. Cet outil est particulièrement adapté pour des matériaux comprenant des fibres de renforcement.

Les rivets coniques sont utilisés, dans la construction aéronautique, pour assembler plusieurs feuilles superposées en vue de constituer des structures telles que les ailes d'avion ou des parties de fuselage. Mais, en raison des conditions d'utilisation, il est nécessaire de disposer entre deux feuilles métalliques à assembler une couche de matériau d'étanchéité polymérisable tel que celui qui est désigné dans la technique par "PR". Lorsque l'alésage est réalisé, le produit n'est pas encore dur. Il s'est avéré que ce matériau provoquait des bourrages à l'intérieur des goujures, de sorte que les copeaux portaient contre la surface de l'alésage ce qui en altérait l'état.

Un premier objet de l'invention est de proposer un outil palliant cet inconvénient.

D'autre part, lorsque l'on assemble des feuilles superposées, les trous de passage des rivets sont rarement exactement en face l'un de l'autre. Il est donc nécessaire d'effectuer une première passe de l'outil qui effectue un dégrossissage puis une seconde passe de finition, quelquefois avec des outils différents.

Un second objet de l'invention est de permettre l'obtention d'un état de surface satisfaisant en une seule passe dans un métal (aluminium, titane, acier etc...) avec un outil unique.

Selon la présente invention, l'alésoir destiné à aléser un trou dans du métal comprenant au moins trois arêtes composites périphériques hélicoïdales séparées par des goujures, une tête et une queue d'attachement, l'hélice étant dans un sens et la coupe dans l'autre sens la partie avant de l'alésoir présentant une enveloppe cylindrique, est caractérisé en ce que l'enveloppe cylindrique de la partie avant de l'alésoir présente une section réduite par rapport à la section minimale de l'enveloppe du corps conique pour former un étage pilote coupant, le corps se poursuivant par un cône de fraisage, un conduit central de lubrification correspondant avec des trous radiaux, alterné sur la longueur du corps de l'alésoir.

Lorsque les arêtes sont à coupe à droite, les hélices sont à gauche. Pour un outil tournant en sens contraire , dans le sens antihoraire en vue par-dessus, l'hélice serait à droite avec la coupe à gauche. Cela se traduit par le fait que les copeaux au lieu d'être évacués vers le haut ou arrière de l'outil sont évacués vers le bas ou avant et ils s'échappent par les trous préalablement percés dans les tôles. Il a été constaté que, dans ces conditions, l'inconvénient de bourrage dû au produit d'étanchéité était éliminé .

Lorsque les trous prépercés dans les tôles à assembler ne sont pas correctement alignés, le pilote permet de retrouver un bon alignement en réusinant les perçages.

D'autres caractéristiques et avantages de l'invention apparaîtront au cours de la description qui va suivre d'un mode particulier de réalisation, donné uniquement à titre d'exemple non limitatif, en regard des dessins qui représentent :
- La figure 1, en perspective un alésoir selon l'invention;
- la figure 2, une vue en bout, par l'avant du même alésoir.

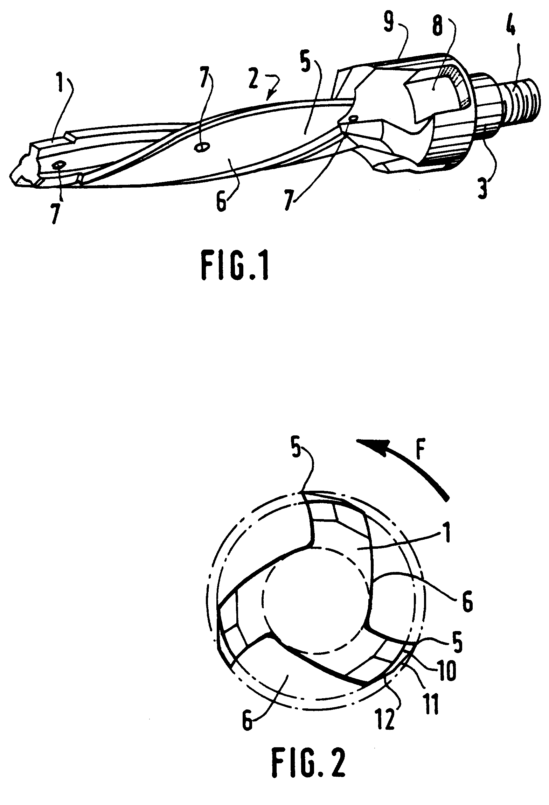

Sur la figure 1, on voit que l'outil se compose d'une partie avant 1 prolongée par le corps conique 2 proprement dit qui se poursuit par une tête 3 à partir de laquelle fait saillie une queue d'attachement 4 qui, dans l'exemple représenté, est filetée. La partie avant 1, destinée à former un étage pilote pour l'outil est également constituée d'arêtes hélicoïdales séparées par des goujures mais elle s'inscrit dans une enveloppe cylindrique (non représentée) dont le diamètre est inférieur au diamètre minimal de l'enveloppe du corps 2 de l'alésoir. Le corps 2 longiligne comporte des arêtes hélicoïdales coupantes 5, au nombre de trois dans l'exemple représenté, en saillie par rapport aux goujures 6 qui sont également hélicoïdales à gauche. Ainsi, les copeaux et le produit d'étanchéité sont évacués vers le bas de l'outil.

Comme cela apparaît sur la figure 2, l'angle de coupe des arêtes est de 4° et chaque arête 5 comprend un listel fin 10, par exemple de 0,1 à 0,2 mm. de largeur ce qui améliore la qualité de finition de l'alésage et diminue les efforts de coupe et le temps d'usinage. Le listel 10 est suivi d'une dépouille 11 de 6 à 8° elle-même suivie d'une contre-dépouille 12 de 25 à 30°, par exemple. Afin de permettre un meilleur dégagement des copeaux et du produit d'étanchéité, les goujure 6 sont, de préférence, polies ce qui assure un bon glissement des copeaux et contribue à la qualité du résultat obtenu.

Dans le pilote 1 et dans le corps 2 apparaissent des trous 7, correspondant avec un canal axial (non représenté) permettant d'amener du lubrifiant et de distribuer celui-ci sur toute la hauteur de l'alésoir. Le canal axial est lui-même relié à une source de distribution de lubrifiant. Les trous radiaux 7 sont formés en des positions alternées pour assurer une distribution homogène du fluide de coupe.

Dans l'exemple représenté, le corps 2 se prolonge par un cône de fraisage 9 à 100°, par exemple, lui-même relié à la tête 3. Dans le cas d'une queue filetée destinée à être montée dans un porte broche, des encoches longitudinales 8 facilitent le montage et le démontage par la face avant.

L'outil selon l'invention est réalisé en acier rapide par exemple. Il permet d'effectuer plusieurs opérations, alignement, alésage, fraisurage, et...en une seule passe.

## Revendications

1. Alésoir destiné à aléser un trou dans du métal comprenant au moins trois arêtes coupantes périphériques hélicoïdales (5) séparées par des goujures (6), une tête (3) et une queue d'attachement (4), l'hélice étant dans un sens et la coupe dans l'autre sens, la partie avant (1) de l'alésoir présentant une enveloppe cylindrique caractérisé, en ce que l'enveloppe cylindrique présente une section réduite par rapport à la section minimale de l'enveloppe du corps conique (2) pour former un étage pilote coupant, le corps (2) se poursuivant par un cône de fraisage (9), un conduit central de lubrification correspondant avec des trous radiaux (7), alterné sur la longueur du corps de l'alésoir.

2. Alésoir selon la revendication 3, caractérisé en ce que la queue (4) étant filetée, des encoches (8) longitudinales sont formées dans la partie avant du cône (9).

3. Alésoir selon l'une quelconque des revendications précédentes, caractérisé en ce que les goujures (6) sont polies.

4. Alésoir selon l'une quelconque des revendications précédentes, caractérisé en ce que les arêtes coupantes (5) présentant un listel fin (10) suivi d'un angle de dépouille de 6 à 8° et d'un angle de contre-dépouille de 25 à 30°.

## Claims

1. A reamer for reaming a hole in metal, the reamer comprising at least three helical peripheral cutting edges (5) separated by flutes (6), a head (3), and an attachment tang (4), the helix being in one direction and cutting being in the other direction, the front portion (1) of the reamer having a cylindrical envelope, the reamer being characterized in that the cylindrical envelope has a section smaller than the smallest section of the envelope of the conical body (2) so as to form a cutting pilot stage, the body (2) is followed by a countersinking cone (9), and a central lubrication duct communicates with radial holes (7) alternating along the length of the reamer body.

2. A reamer according to claim 1, characterized in that the tang (4) is threaded, and longitudinal notches (8) are formed in the front portion of the cone (9).

3. A reamer according to any preceding claim, characterized in that the flutes (6) are polished.

4. A reamer according to any preceding claim, characterized in that the cutting edges (5) present a fine heel (10) followed by a release angle of 6° to 8° and an undercut angle of 25° to 30°.

## Patentansprüche

1. Reibahle zum Ausreiben eines Loches in einem Metall, bestehend aus mindestens drei wendelförmig am Umfang verlaufenden Schneidkanten (5), die gegeneinander durch Hinterschneidungen (6) getrennt sind, aus einem Kopf (3) und einem Befestigungsendstück (4), wobei der vordere Teil (1) der Reibahle einen zylindrischen Einhüll-Mantel aufweist, dadurch gekennzeichnet, daß der zylindrische Einhüll-Mantel einen gegenüber dem kleinsten Querschnitt des Einhüll-Mantels des konischen Körpers (2) reduzierten Querschnitt aufweist, um eine Vorschneidstufe zu bilden, und daß der Körper (2) in einen Fräskonus (9) übergeht und ein zentraler Schmierkanal korrespondierend zu radialen Öffnungen (7) vorgesehen ist, die abwechselnd über die Länge des Reibahlenkörpers verteilt sind.

2. Reibahle nach Anspruch 1, dadurch gekennzeichnet, daß das Endstück (4) mit einem Gewinde versehen ist, und in dem vor dem konisch liegenden Teil Längstaschen (8) eingeformt sind.

3. Reibahle nach einem der vorhergehenden Ansprüche, dadurch gekennzeichnet, daß die Hinterschneidungen (6) poliert sind.

4. Reibahle nach einem der vorhergehenden Ansprüche, dadurch gekennzeichnet, daß die Schneidkanten (5) Phasen (10) und einen daran anschließenden Rückenfreiwinkel von 6° bis 8° und einen Gegenwinkel von 25° bis 30° aufweisen.
